(19) Europäisches Patentamt

European Patent Office

Office européen des brevets

(11) Veröffentlichungsnummer: **0 344 488 B1**

(12) **EUROPÄISCHE PATENTSCHRIFT**

(45) Veröffentlichungstag der Patentschrift: **14.09.94**

(51) Int. Cl.⁵: **G01D 5/243**

(21) Anmeldenummer: **89108377.6**

(22) Anmeldetag: **10.05.89**

(54) **Verfahren zum Digitalisieren wenigstens annähernd sinusförmiger Wechselspannungs-Signale eines Signalgebers und Vorrichtung zur Durchführung des Verfahrens.**

(30) Priorität: **14.05.88 DE 3816568**

(43) Veröffentlichungstag der Anmeldung:
**06.12.89 Patentblatt 89/49**

(45) Bekanntmachung des Hinweises auf die
Patenterteilung:
**14.09.94 Patentblatt 94/37**

(84) Benannte Vertragsstaaten:
**DE ES FR GB IT**

(56) Entgegenhaltungen:
**DE-A- 3 516 282**
**US-A- 4 450 443**

**PATENT ABSTRACTS OF JAPAN vol. 6, no. 8**
**(P-98)(886) 19 Januar 1982,& JP-A-56 137110**

(73) Patentinhaber: **Bodenseewerk Gerätetechnik GmbH**
**Alte Nussdorfer Strasse 15**
**Postfach 1120**
**D-88662 Überlingen (DE)**

(72) Erfinder: **Reichel, Reinhard Wolfram**
**Schilfsweg 2**
**D-7770 Überlingen (DE)**
Erfinder: **Fischer, Erik**
**Grenzweg 39**
**D-7990 Friedrichshafen 5 (DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast**
**Bökenbusch 41**
**Postfach 11 03 86**
**D-42531 Velbert (DE)**

## Beschreibung

## Technisches Gebiet

Die Erfindung betrifft ein Verfahren zum Digitalisieren der Amplitude wenigstens annähernd sinusförmiger Wechselspannungssignale eines Signalgebers der von einer Referenz-Wechselspannung gespeist wird und eine Signalwechselspannung nach Massgabe einer auf den Signalgeber einwirkenden Messgrösse liefert

(a) unter mindestens einmaliger mit dem Wechselspannungsignal synchronisierter Abtastung des Wechselspannungs-Signals, Digitalisierung der abgetasteten Werte

(b) und Errechnung der Amplitude des Wechselspannungssignals in digitalen Rechnermitteln aufgrund der abgetasteten digitalen Werte.

Ausserdem betrifft die Erfindung eine Vorrichtung zum Durchführen des obenstehenden Verfahrens.

Solche Wechselspannungs-Signale treten als Ausgangssignale von induktiven Abgriffen, beispielsweise eines als Differentialtransformator ausgebildeten Weg- oder Winkelgebers auf. Es gilt dann, aus dem Wechselspannungs-Signal ein digitales Weg- oder Winkelsignal zu erzeugen, das der Amplitude des als Ausgangssignal erhaltenen Wechselspannungs-Signals entspricht. Dieses digitale Weg- oder Winkelsignal wird dann von einem digitalen Rechner weiterverarbeitet.

## Zugrundeliegender Stand der Technik

Es sind als Differentialtransformatoren ausgebildete Weg- oder Winkelgeber bekannt. Bei diesen ist eine Primärwicklung vorgesehen, die mit einer Wechselspannung von vorgegebener Amplitude und Phase als Erregerspannung beaufschlagt ist. Der Differentialtransformator weist zwei gegeneinandergeschaltete Sekundärwicklungen auf. Die magnetische Kopplung zwischen der Primärwicklung und den Sekundärwicklungen ist nach Maßgabe der Meßgröße z.B. durch Verschieben eines Kernes veränderbar. Dementsprechend wird in einer Mittelstellung in beiden Sekundärwicklungen die gleiche Wechselspannung induziert. Die gegeneinandergeschalteten Sekundärwicklungen liefern dann die resultierende Ausgangsspannung null. Wird die Kopplung zwischen der Primärwicklung und der einen Sekundärwicklung durch Verschieben des Kernes nach der einen Seite verstärkt und dementsprechend die Kopplung zwischen der Primärwicklung und der anderen Sekundärwicklung verringert, dann wird in der einen Sekundärwicklung eine größere, in der anderen Sekundärwicklung eine kleinere Wechselspannung induziert. Es ergibt sich dabei ein Wechselspannungs - Signal am Ausgang, dessen Amplitude von der Verschiebung des Kernes abhängt und die je nach der Richtung der Verschiebung gleich- oder gegenphasig mit der an der Primärwicklung anliegenden Erregerspannung ist. Bei einer Verschiebung des Kernes aus der Nullage in die andere Richtung wird ebenfalls ein Wechselspannungs - Signal am Ausgang erzeugt, dessen Amplitude ein Maß für diese Verschiebung ist und das gegenphasig zu dem bei der Verschiebung in die erstere Richtung auftretenden Wechselspannungs - Signal ist.

Es ist häufig erforderlich, Weg- oder Winkelsignale digital weiterzuverarbeiten. Nach dem Stand der Technik wird dazu das Wechselspannungs - Signal demoduliert, also in eine der Amplitude des Wechselspannungs - Signals proportionale Gleichspannung umgesetzt. Diese Gleichspannung wird dann von einem Analog - Digital - Wandler in ein Digitalsignal umgesetzt.

Die bekannte Anordnung zur Demodulation und zur Digitalisierung von Wechselspannungs - Signalen ist aufwendig, da sie eine zusätzliche analoge Signalverarbeitung erfordern. Da für jeden Weg- oder Winkelgeber, der ein zu demodulierendes und zu digitalisierendes Wechselspannungs - Signal liefert, ein gesonderter analoger Demodulator erforderlich ist, ergibt sich bei Geräten mit einer größeren Anzahl von solchen Weg- oder Winkelaufnehmern ein sehr großer Hardwareaufwand. Die analogen Bauteile sind außerdem der Alterung unterworfen und erfordern einen Abgleich.

Aus der US-A-4 450 443 ist ein Weg- oder Winkelgeber mit einem Transformator mit beweglichem Kern bekannt, dessen Primärwicklung ein stabiles sinusförmiges Referenz-Signal von verhältnismässig hoher Frequenz zugeführt wird. Die Spitzenwerte dieses Signals sowie die Spitzenwerte des an der einzigen Sekundärwicklung erhaltenen Signals, werden durch Abtast- und Haltekreise in Gleichspannungen umgewandelt. Die Gleichspannungen werden digitalisiert und zur Ermittlung der Position des beweglichen Kernes miteinander verglichen. Zwar soll hierdurch die Genauigkeit erhöht werden, jedoch ist ein sehr erheblicher Aufwand an analogen Bauteilen erforderlich, so dass die damit verbundenen Nachteile auftreten.

In der Rundfunk- und Fernsehtechnik ist es bekannt, zur Demodulation amplitudenmodulierter, hochfrequenter Eingangssignale diese Eingangssignale mit hoher Abtastfrequenz abzutasten und die so erhaltenen digitalen Signale digital weiterzuverarbeiten. (DE-A1-35 16 282).

Die DE-A1-34 29 061 beschreibt eine Schaltungsanordnung zur Demodulation und A/D-Umwandlung von winkelmodulierten Signalen. Die Schaltungsanordnung besteht aus einer Vielzahl von analogen Verzögerungselementen und einer entsprechenden Anzahl von Koinzidenzdetektoren. Die Koinzidenzdetektoren erhalten einmal die Signale der zugehörigen Verzögerungselemente und zum anderen Impulse beim Nulldurchgang des Eingangssignals. Die Ausgänge der Koinzidenzdetektoren sind auf einen Decoder geschaltet.

Die DE-A1-32 33 829 beschreibt ebenfalls ein Verfahren zur Demodulation amplitudenmodulierter Eingangssignale. Dort wird digital ein synthetisches Signal erzeugt, das laufend analog mit dem Eingangssignal verglichen wird. Daraus ergibt sich auch ein Digitalwert für die Amplitude des Eingangssignals.

Die EP-A2-0 226 546 betrifft einen inkrementalen Weggeber, bei welchem eine Skala durch zwei Magnetfühler abgetastet wird, wobei die Signale der beiden Magnetfühler sich mit dem Sinus und dem Kosinus eines den Weg wiedergebenden Winkels ändern. Diese Signale werden durch A/D-Wandler digitalisiert und nach digitaler Berücksichtigung eines Phasenwinkels einem Komparator zugeführt. Dieser erzeugt Rechteckimpulse, die in einem Zähler gezählt werden. Es handelt sich hier nicht um eine Wechselspannung, deren Amplitude von einer Messgrösse variiert wird und nicht um eine Demodulation.

Ähnliche Anordnungen zeigen die EP-A1-0 171 382 und die DE-A-27 29 697. Auch die DE-C2-31 41 397 zeigt eine digitale Messeinrichtung zur digitalen Messung von Verschiebebeträgen eines Verschiebeteils einer Werkzeugmaschine mit einer Spindel und einer Kodiereinrichtung zur Umwandlung der Drehbewegung der Spindel in digitale Impulssignale.

Durch die JP-A-52-124 872 ist ein digitaler Detektor für die Einhüllende einer amplitudenmodulierten Welle bekannt, bei welchem die empfangene Welle mit einer festen Frequenz abgetastet wird und die abgetasteten Signale in einem Analogwertspeicher gespeichert werden. Diese Signale werden dann durch einen A/D-Wandler digitalisiert und einem digitalen Tiefpassfilter zugeführt. Die dem Grandband entsprechenden Signale werden über eine digitale Absolutwertschaltung auf einen D/A-Wandler als demodulierter Ausgang aufgeschaltet.

In dem Buch "Elektrisch Messen, Zählen und Registrieren" von W.S. Jahn, Richard Pflaum Verlauf München, Seite 48 (Bild 39) ist ein Druckmesser dargestellt, der von einer Netzwechselspannung gespeist ist. Das am Ausgang erhaltene Wechselstrom-Signal wird durch einen Brückengleichrichter gleichgerichtet. Die gleichgerichtete Spannung wird digitalisiert und mittels eines Zählers angezeigt.

Die DE-A-20 01 537 zeigt eine Anordnung mit einem Resolver, der Wechselspannungen liefert, welche nach einer Sinus- bzw. Kosinusfunktion von einem Drehwinkel abhängen. Winkelfunktionen eines zweiten Winkels werden digital eingegeben, durch einen D/A-Wandler in analoge Signale umgewandelt und mit den Resolversignalen multipliziert, wobei durch Linearkombinationen die Winkelfunktionen der Winkeldifferenz nach Gesetzen der Trigonometrie erhalten werden.

Die JP-A-56 137 110, Patent Abstracts of Japan. Vol. 6, No.8 (P-98) (886) 19. Januar 1982, beschreibt eine Anordnung zum Ermitteln der Ausgangsspannung eines als Weggeber dienenden Differentialtransformators mit beweglichem Kern. Hierzu wird während jeder Vollwelle der Ausgangsspannung der Maxiamalwert unmittelbar mittels eines Analog-Digital-Wandlers in digitaler Form ermittelt und von einem digitalen Rechner ausgegeben. Das setzt voraus, dass die Abtastung genau im Maximum der Wechselspannung erfolgt. Hierzu wird ein "Lese"-Puls erzeugt, der die Abtastung auslöst. Da pro Periode oder zumindest pro Halbwelle nur eine Abtastung stattfindet, können durch Störungen Verfälschungen des Ergebnisses auftreten.

**Offenbarung der Erfindung**

Der Erfindung liegt die Aufgabe zugrunde, bei einem Signalgeber der eingangs genannten Art, der üblicherweise mit Netzfrequenz als Referenz-Wechselspannung gespeist wird, das Ausgangssignal auf einfache Weise zu demodulieren und mit sehr hoher Genauigkeit in ein Digitalsignal zur Weiterverarbeitung in einem digitalen Rechner umzusetzen.

Erfindungsgemäss wird diese Aufgabe durch ein Verfahren gelöst gemäß Anspruch 1 und durch eine Vorrichtung zur Durchführung dieses Verfahrens gemäß Anspruch 3.

Es erfolgt also nicht zunächst eine Demodulation des Wechselspannungs-Signals zur Erzeugung eines die Amplitude darstellenden Gleichspannungs-Signals. Vielmehr wird das Wechselspannungs-Signal unmittelbar, und zwar mindestens zweimal, abgetast. Die abgetasteten Werte des Wechselspannungs-Signals werden digitalisiert. Aus jeweils zwei oder mehreren dieser digitalen Werte erzeugt der Rechner selbst dann ein Signal, das die Amplitude des Wechselspannungs-Signals in digitaler Form wiedergibt und zwar mit einer sehr hohen Genauigkeit, wie sie sich durch Abtastung der Maxima nicht erreichen liesse.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

**Kurze Beschreibung der Zeichnungen**

Fig. 1 ist ein Blockdiagramm einer Vorrichtung zur Digitalisierung eines Wechselspannungs-Signals in allgemeiner Form.

Fig. 2 ist ein Beispiel einer Signalquelle bei der Vorrichtung von Fig. 1, wie sie zum Stand der Technik gehört und auch bei der Erfindung verwendet wird,

Fig. 3 zeigt den Signalverlauf eines modulierten Wechselspannungs-Signals, wobei die Abtastung in fester Phasenbeziehung mit dem Signal und, wie beim Stand der Technik, nur einmal in jeder Phase erfolgt.

Fig. 4 zeigt in allgemeiner Form den Signalverlauf eines modulierten Wechselspannungs-Signals mit zweimaliger Abtastung, wobei die Abtastung nicht in fester Phasenbeziehung mit dem Signal erfolgt.

Fig. 5 zeigt den Signalverlauf eines modulierten Wechselspannungs-Signals und eine Abtastung in mehr als zwei Punkten zur Erzielung einer Filterung.

Fig. 6 zeigt in einem Blockdiagramm den Signalgeber mit der Signalquelle und dem A/D-Wandler und dem Rechner und veranschaulicht die Signalverarbeitung in dem Rechner.

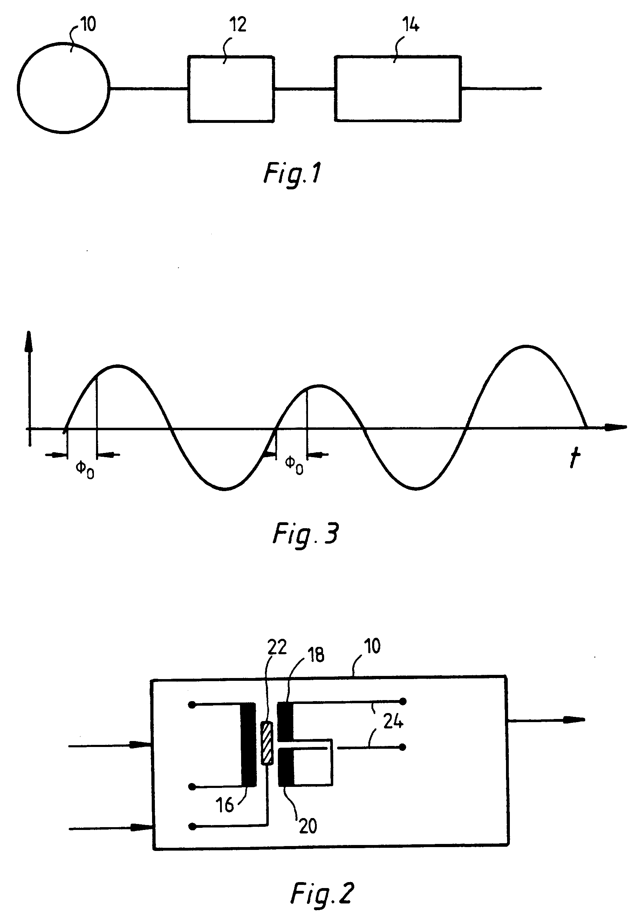

Die Fig. 1 bis 3 dienen lediglich zur Erläuterung der Erfindung, die Erfindung selbst ist in ihnen nicht dargestellt.

**Bevorzugte Ausführung der Erfindung**

Fig. 1 veranschaulicht das Grundprinzip der Digitalisierung eines von einer Signalquelle 10 gelieferten Wechselspannungs-Signals. Das in bestimmten Zeitpunkten abgetastete Wechselspannungs-Signal wird unmittelbar durch einen Analog-Digital-Wandler 12 in entsprechende Digitalsignale umgesetzt. Aus diesen Digitalsignalen wird in einem Digitalrechner 14 die Amplitude des Wechselspannungs-Signals berechnet. Dieses Verfahren geht also nicht den Umweg über ein durch Demodulation gewonnenes, der Amplitude des Wechselspannungs-Signals entsprechendes Gleichstromsignal. Beim Stand der Technik erfolgt meist die Abtastung dann, wenn die Amplitude das Maximum erreicht hat.

Fig. 2 zeigt als typischen Signalgeber ein nach dem Prinzip des Differentialtransformators arbeitenden Weggeber.

Der Signalgeber 10 enthält einen Transformator mit einer Primärwicklung 16, an welcher eine Wechselspannung konstanter Amplitude anliegt, und mit einer ersten Sekundärwicklung 18 und einer zweiten Sekundärwicklung 20. Die beiden Sekundärwicklungen 18 und 20 sind gegeneinandergeschaltet. Dadurch heben sich die von der Primärwicklung 16 her in den Sekundärwicklungen 18 und 20 induzierten Spannungen wenigstens teilweise auf. Die magnetische Kopplung zwischen der Primärwicklung 16 und jeder der beiden Sekundärwicklungen wird bestimmt durch einen Kern 22, der längs der Primärwicklung 16 und der beiden Sekundärwicklungen 18 und 20 verschiebbar ist. Der Verstellweg x des Kerns 22 stellt die Eingangsgröße des Weggebers dar. In einer Mittelstellung des Kerns 22 ist die Primärwicklung 16 gleich stark mit beiden Sekundärwicklungen 18 und 20 magnetisch gekoppelt. In den beiden Sekundärwicklungen 18 und 20 werden daher gleiche Wechselspannungen induziert. Diese Wechselspannungen heben sich wegen der Gegeneinanderschaltung heraus. Das resultierende Wechselspannungs-Signal ist null. Bei einer Verschiebung des Kerns 22 etwa nach oben in Fig. 2 wird die magnetische Kopplung zwischen der Primärwicklung 16 und der Sekundärwicklung 18 vergrößert und die magnetische Kopplung zwischen der Primärwicklung 16 und der Sekundärwicklung 20 verringert. In der Sekundärwicklung 18 wird daher eine höhere Wechselspannung induziert als in der Sekundärwicklung 20. An den Ausgangsklemmen 24 erscheint ein Wechselspannungs-Signal, dessen Amplitude dem Verstellweg des Kerns 22 in bestimmten Positionsbereichen proportional ist. Bei einer Verschiebung des Kerns 22 nach unten in Fig. 2 wird in der Sekundärwicklung 20 eine höhere Spannung induziert als in der Sekundärwicklung 18. Die Amplitude des resultierenden Wechselspannungs-Signals ist dann ebenfalls vom Verstellweg des Kerns 22 anhängig, jedoch ist das Wechselspannungs-Signal gegenphasig zu dem, das bei einer Verschiebung des Kerns 22 nach oben erhalten wurde.

Gemäß Fig. 3 erfolgt die Abtastung jeweils in bekannter, fester Phasenlage zu dem Wechselspannungs-Signal. Diese Phasenlage ist durch einen Winkel zwischen dem Nulldurchgang der Wechselspannung und dem Abtastpunkt bestimmt. Wenn dieser Winkel bekannt ist, genügt theoretisch eine Abtastung um die Amplitude des Wechselspannungs-Signals berechnen zu können. Der Rechner 14 berechnet dann die Amplitude aus dem abgetasteten, digitalisierten Wert dividiert durch den Sinus des Winkels.

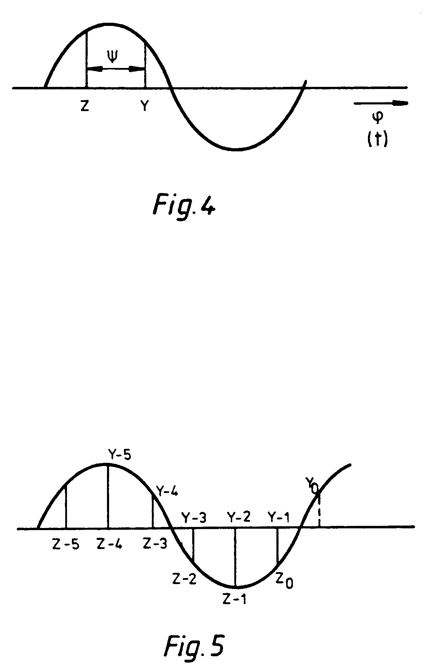

Jedoch kann auch ohne Bekanntsein des Winkels die Amplitude aus zwei Abtastungen des Wechselspannungs-Signals gewonnen werden, die in zwei um einen festen Phasenwinkel gegeneinander verschobenen Zeitpunkten erfolgen. In Fig. 4 ist als einfachster Fall eine Abtastung in zwei Zeitpunkten dargestellt, die um 90° oder eine Viertelperiode des Wechselspannungs-Signals gegeneinander versetzt sind.

Bezeichnet man mit A die Amplitude des Wechselspannungs-Signals und mit y und z zwei Werte des Wechselspannungs-Signals in zwei beliebigen, um 90° gegeneinander phasenverschobenen Zeitpunkten, dann ist:

(1) $\quad A^2 = y^2 + z^2$.

Im allgemeinen ist das Wechselspannungs-Signal nicht ideal sinusförmig sondern weist Oberwellen auf. Die Abtastung und Digitalisierung dieses Signals in nur zwei Punkten führt daher in der Regel nicht zu einem genauen Ergebnis. Zur Filterung werden daher, wie in Fig. 5 dargestellt, Folgen von Abtastwerten $y_0$, $y_{-1}$, $y_{-2}$, $y_{-4}$, $y_{-5}$ und $z_0$, $z_{-1}$, $z_{-2}$, $z_{-3}$, $z_{-4}$, $z_{-5}$ erfaßt. Abtastwerte y und z mit gleichem Index sind um einen Winkel von 60° gegeneinander phasenverschoben. Die aufeinanderfolgenden Abtastwerte x sind jeweils ebenfalls um 60° gegeneinander phasenverschoben. Ebenfalls sind die aufeinanderfolgenden Abtastwerte y jeweils um 60° gegeneinander phasenverschoben. Die Verschiebung der "z" gegenüber den "y" um 60° statt wie in Fig. 4 um 90° hat den Vorteil, daß einzelne "z"-Abtastwerte mit "y"-Abtastwerten zusammenfallen, also beispielsweise $z_{-1}$ mit $y_{-2}$. Es sind daher insgesamt weniger Abtastungen und Digitalisierungsvorgänge erforderlich, da einige Abtastwerte doppelt verwenden können.

Bei einer solchen Abtastung und mit Filterung werden aus den "z"-Abtastwerten und den "y"-Abtastwerten Linearkombinationen gebildet. Eine erste Linearkombination ist:

$$(2) \quad \tilde{y} = a_0\, y_0 + a_{-1}\, y_{-1} + \ldots + a_{-(n-1)}\, y_{-(n-1)}$$

Eine zweite Linearkombination ist:

$$(3) \quad \tilde{z} = a_0\, z_0 + a_{-1}\, z_{-1} + \ldots + a_{-(n-1)}\, z_{-(n-1)}$$
$$= a_0\, y_{-1} + a_{-1}\, y_{-2} + \ldots + a_{-(n-1)}\, y_{-n}$$

Die Amplitude A der Wechselspannung wird dann

$$(4) \quad A = b\,\sqrt{\tilde{y}^2 + \tilde{z}^2 - \tilde{y}\cdot\tilde{z}}$$

Für die Filterkoeffizienten $a_i$ muß dabei gelten:

$$(5) \quad b = \left[\sum_{k=0}^{-(n-1)} \sum_{l=0}^{-(n-1)} a_k\, a_l\, \frac{1}{4}\left(3\cos(k-l)\,\vartheta\right) - \sqrt{3}\,\sin((k-l)\,\vartheta)\,\right]^{-1/2}$$

Aus einem Signal, welches das Vorzeichen der Erregerspannung repräsentiert und einem Abtastwert (oder aus Abtastwerten zur Filterung gebildeten Werten) wird ein Signal erzeugt, das das Vorzeichen des Wechselspannungs-Signals, also die Phasenlage zur Erregerspannung wiedergibt.

Diese Signalverarbeitung entspricht einem digitalen Bandpaßfilter.

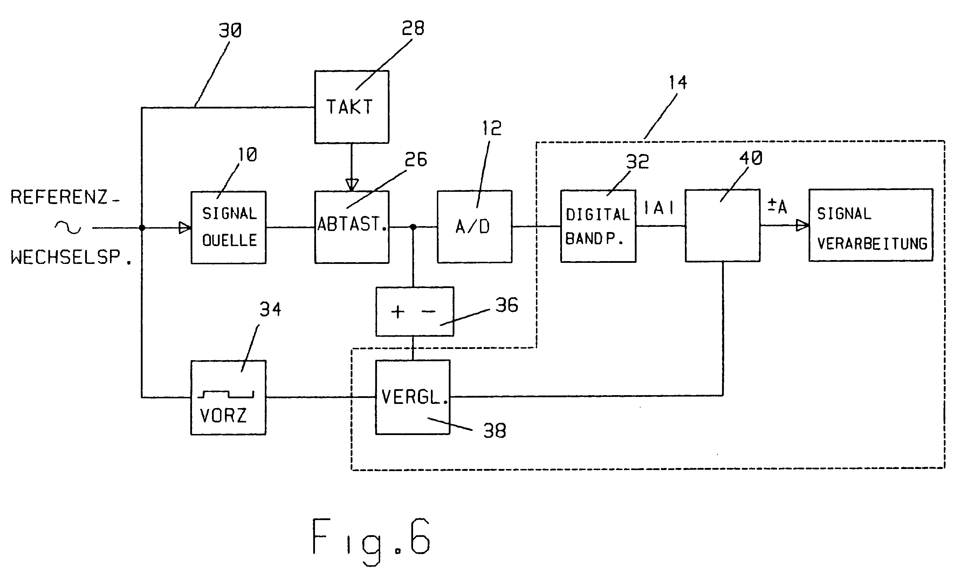

Fig. 6 zeigt in einem Blockdiagramm die Signalverarbeitung durch den digitalen Rechner.

Die Referenz-Wechselspannung, üblicherweise die Netzspannung, liegt an der Signalquelle 10 an, die nach Art von Fig. 2 aufgebaut ist. Die Signalquelle 10 liefert ein zu demodulierendes und zu digitalisierendes Wechselspannungs-Signal. Dies Wechselspannungs-Signal wird, wie durch Block 26 dargestellt ist, mit einem bestimmmten Takt abgetastet. Der Takt wird von einem Taktgeber 28 geliefert, der, wie durch Linie 30 angedeutet, mit der Referenz-Wechselspannung synchronisiert ist. Die Abtastung erfolgt, wie in Fig. 5 dargestellt ist, mit Phasenunterschieden von jeweils 60° zwischen den einzelnen Abtastungen. Die abgetasteten Signale werden mittels des A/D-Wandlers 12 digitalisiert. Die digitalisierten Signale werden einem digitalen Bandpass 32 zugeführt. Der digitale Bandpass arbeitet in der vorstehend beschriebenen Weise mit der Bildung von Linearkombinationen der abgetasteten Werte. Der Bandpass 32 liefert den Betrag der Amplitude A in digitaler Form.

Aus der Referenz-Wechselspannung wird durch eine Schaltung 34 ein logisches Signal (H oder L) erzeugt, das das jeweilige Vorzeichen der Referenz-Wechselspannung wiedergibt. Eine Schaltung 36 liefert ein logisches Signal, das dem Vorzeichen eines bestimmten abgetasteten Wertes des Wechselstrom-Signals entspricht. Der Rechner 14 vergleicht die beiden logischen Signale der Schaltungen 34 und 36, wie durch Block 38 dargestellt ist. Nach dem Ergebnis dieses Vergleichs wird dem Ausgangswert des digitalen Tiefpasses 32 das Vorzeichen "+" oder "-" zugeordnet. Das ist durch Block 40 dargestellt. Das so erhaltene, mit einem Vorzeichen versehene digitale Signal +/-A entspricht dem durch das Wechselspannungs-Signal dargestellten analogen Ausgangssignal der Signalquelle 10, aber in digitaler Form. Dieses digitale Signal wird in dem Rechner 14 weiterverarbeitet.

Für die Demodulation wird also der gleiche Rechner benutzt, der auch zur sonstigen Signalverarbeitung eingesetzt wird. Der Mehraufwand liegt nur in der Software. Der Rechner 14 kann aber mit der gleichen Software auch die Signale anderer ähnlicher Signalgeber demodulieren.

## Patentansprüche

**1.** Verfahren zum Digitalisieren der Amplitude wenigstens annähernd sinusförmiger Wechselspannungssignale eines Signalgebers, der von einer Referenz-Wechselspannung gespeist wird und eine Signalwechselspannung nach Massgabe einer auf den Signalgeber einwirkenden Messgrösse liefert

(a) unter mindestens einmaliger synchronisierter Abtastung des Wechselspannungssignals, Digitalisierung der abgetasteten Werte,

(b) und Errechnung der Amplitude des Wechselspannungssignals in digitalen Rechnermitteln aufgrund der abgetasteten digitalisierten Werte,

**dadurch gekennzeichnet, dass**

(c) die Abtastung des Wechselspannungssignals mehr als zweimal zu Zeitpunkten mit definiertem Phasenabstand in einer Halbwelle erfolgt und

(d) zur Errechnung der Amplitude die abgetasteten und digitalisierten Wechselspannungssignale einen digitalen Bandpass durchlaufen.

**2.** Verfahren nach Anspruch 1, unter Verwendung eines Signalgebers dem eine Referenz-Wechselspannung zugeführt wird, **dadurch gekennzeichnet, dass** das Wechselspannungssignal aus der Referenz-Wechselspannung so abgeleitet wird, dass das Wechselspannungssignal zu der Referenz-Wechselspannung je nach dem Vorzeichen der Messgrösse entweder gleich- oder gegenphasig ist.

**3.** Induktiver Signalgeber zur Durchführung des Verfahrens nach Anspruch 1, enthaltend einen Transformator mit einer Primärwicklung (16), an welcher eine Referenz-Wechselspannung anliegt, zwei Sekundärwicklungen (18 bzw. 20), die zur Erzeugung eines Wechselspannungs-Signals an einem Ausgang (24) gegeneinandergeschaltet sind, Mittel zur unterschiedlichen Veränderung der induktiven Kopplung zwischen der Primärwicklung (16) und der ersten Sekundärwicklung (18) einerseits und der zweiten Sekundärwicklung andererseits nach Massgabe einer auf den Signalgeber einwirkenden Messgrösse, Mittel (12,26,28) zur synchronisierten Abtastung des Wechselspannungssignals und zur Digitalisierung der abgetastene Werte; und digitale Rechnermittel (14) zur Berechnung der Amplitude des Ausgangswechselspannungssignals aus den digitalisieren Abtastwerten; **dadurch gekennzeichnet, dass**

(a) die Abtastmittel zur mehr als zweimaligen Abtastung des Wechselspannungssignals zu Zeitpunkten mit definierten Phasenabstand in einer Halbwelle eingerichtet sind und

(b) die Rechnermittel ein digitales Bandfilter (32) enthalten, auf welches die abgetasteten und digitalisierten Wechselspannungssignale aufgeschaltet sind.

4. Signalgeber nach Anspruch 4, **dadurch gekennzeichnet, dass** das digitale Bandfilter
   (a) eine erste Linearkombination von abgetasteten und digitalisierten ersten Werten des Wechselspannungssignals

$$(2) \quad \tilde{y} = a_0\, y_0 + a_{-1}\, y_{-1} + \dots + a_{-(n-1)}\, y_{-(n-1)}$$

(b) und eine zweite Linearkombination von abgetasteten und digitalisierten zweiten Werten des Wechselspannungssignals

$$(3) \quad \tilde{z} = a_0\, z_0 + a_{-1}\, z_{-1} + \dots + a_{-(n-1)}\, z_{-(n-1)}$$
$$= a_0\, y_{-1} + a_{-1}\, y_{-2} + \dots + a_{-(n-1)}\, y_{-n}$$

bildet, wobei die zweiten Werte mit einer festen Phasenbeziehung zu den ersten Werten abgetastet sind, und
(c) die Amplitude (A) des Wechselspannungssignals aus der Beziehung

$$(4) \quad A = b\,\sqrt{\tilde{y}^2 + \tilde{z}^2 - \tilde{y}\cdot\tilde{z}}$$

gebildet wird,
(d) wobei die Filterkoeffizienten der Beziehung

$$(5) \quad b = \left[\ \sum_{k=0}^{-(n-1)}\ \sum_{l=0}^{-(n-1)} a_k\, a_l\, \frac{1}{4}\, (3\cos((k-l)\,\psi) - \sqrt{3}\,\sin((k-l)\,\psi))\right]^{-1/2}$$

genügen.

5. Signalgeber nach einem oder mehreren der Ansprüche 3 bis 4, **dadurch gekennzeichnet, dass**
   (a) das Wechselspannungssignal aus der Referenz-Wechselspannung abgeleitet und zu dieser entweder gleich- oder gegenphasig ist,
   (b) Mittel zur Bildung eines aus der Referenz-Wechselpsannung abgeleiteten Vorzeichensignals vorgesehen sind und
   (c) die Rechnermittel zur Bildung eines das Vorzeichen der Wechselspannung repräsentierenden Signals aus einem abgetasteten Wert des Wechselspannungssignals und dem zugehörigen Vorzeichensignal eingerichtet sind.

## Claims

1. Method of digitizing the amplitude of at least approximately sinusiodal a.c. voltage signals of a signal transmitter, to which a reference a.c. voltage is supplied and which supplies a signal a.c. voltage as a function of a measuring quantity acting on the signal transmitter,
   (a) with at least one synchronized sampling of the a.c. voltage signal, digitalization of the sampling values,

(b) and calculation of the amplitude of the a.c. voltage signal in digital computer means on the basis of the sampled digitalized values,

**characterized in that**

(c) the sampling of the a.c. voltage signal is effected more than two times at moments with defined phase distance in one half-wave and

(d) the sampled and digitalized a.c. voltage signals pass through a digital band filter for calculation of the amplitude.

2. Method as set forth in claim 1, using a signal transmitter to which a reference a.c. voltage is supplied, **characterized in that** the a.c. voltage signal is derived from the reference a.c. voltage such that the a.c. voltage signal either is in phase or antiphase with respect to the reference a.c. voltage depending on the sign of the measuring quantity.

3. Inductive signal transmitter for carrying out the method according to claim 1, comprising a transformer having a primary winding (16), to which a reference a.c. voltage is applied, two secondary windings (18 and 20, respectively), which are connected in push-pull mode in order to generate an a.c. voltage signal at an output (24), means for different variation of the inductive coupling between the primary winding (16) and the first secondary winding (18) on one hand, and the second secondary winding on the other hand, as a function of a measuring quantity acting on the signal transmitter, means (12, 26, 28) for synchronized sampling of the a.c. voltage signal and for digitalization of the sampled values; and digital computer means (14) for calculation of the amplitude of the output a.c. voltage signal from the digitalized sampled values; **characterized in that**

(a) the sampling means are adapted to sample the a.c. voltage signal more than two times at moments with defined phase distance in one half-wave and

(b) the computer means comprise a digital band filter (32), to which the sampled and digitalized a.c. voltage signals are applied.

4. Signal transmitter as set forth in claim 3, **characterized in that** the digital band filter forms

(a) a first linear combination of sampled and digitalized first values of the a.c. voltage signal

$$(2) \qquad \widetilde{y} = a_0 y_0 + a_{-1} y_{-1} + \ldots + a_{-(n-1)} y_{-(n-1)}$$

(b) and a second linear combination of sampled and digitalized second values of the a.c. voltage signal

$$(3) \qquad \begin{aligned} \widetilde{z} &= a_0 z_0 + a_{-1} z_{-1} + \ldots + a_{-(n-1)} z_{-(n-1)} \\ &= a_0 y_{-1} + a_{-1} y_{-2} + \ldots + a_{-(n-1)} y_{-n} \end{aligned}$$

the second values being sampled with a fixed phase relation to the first values, and the amplitude (A) of the a.c. voltage signal is derived from the relation

$$(4) \qquad A = b \cdot \sqrt{\widetilde{y}^2 + \widetilde{z}^2 - \widetilde{y} \cdot \widetilde{z}}$$

(d) the filter coefficients satisfying the relation

$$(5) \qquad b = \left[ \sum_{k=0}^{-(n-1)} \sum_{l=0}^{-(n-1)} a_k a_l \tfrac{1}{4} \left( 3 \cos(k-l)\psi - \sqrt{3} \sin((k-l)\psi) \right) \right]^{-1/2}$$

5. Signal transmitter as set forth in claims 3 and/or 4, **characterized in that**

(a) the a.c. voltage signal is derived from the reference a.c. voltage and is either in phase or antiphase therewith,

(b) means are provided for forming a sign signal derived from the reference a.c. voltage, and

(c) the computer means are adapted to form a signal representing the sign of the a.c. voltage from a sampled value of the a.c. voltage signal and the associated sign signal.

**Revendications**

1. Méthode destinée à digitaliser des amplitudes de signaux de tension alternative au moins approximativement sinusoidaux d'un capteur de signal alimenté par une tension alternative de référence et fournissant une tension alternative de signal selon une grandeur de mesure influant sur le capteur de signal,

(a) alors que le signal de tension alternative est synchroniquement exploré au moins une fois, les valeurs explorées sont digitalisées,

(b) et l'amplitude du signal de tension alternative est calculée dans des moyens digitaux de calculateur sur la base des valeurs digitalisées explorées,

**caractérisée par le fait que**

(c) l'exploration du signal de tension alternative est effectuée plus que deux fois à des moments avec un ecart de phase défini dans une demi-onde, et

(d) afin de calculer l'amplitude, les signaux de tension alternative explorés et digitalisés passent par un passe-bande digital.

2. Méthode selon la revendication 1, en utilisant un capteur de signal auquel est amené une tension alternative de référence, **caractérisée par le fait que** le signal de tension alternative est dérivé de la tension alternative de référence de sorte que le signal de tension alternative est soit en phase soit en phase opposée par rapport à la tension alternative de référence en fonction du signe de la grandeur de mesure.

3. Capteur de signal inductif destiné à effectuer la méthode selon la revendication 1, comprenant un transformateur muni d'un enroulement primaire (16) auquel est appliquée une tension alternative de référence, de deux enroulements secondaires (18 et 20) appliqués en opposition à une sortie (24) afin d'engendrer un signal de tension alternative, de moyens destinés à la variation différente de l'accouplement inductif entre l'enroulement primaire (16) et le premier enroulement secondaire (18) de l'un côté, et du second enroulement secondaire de l'autre côté, en fonction d'une grandeur de mesure influant sur le capteur de signal, de moyens (14) destinés à l'exploration synchronisée du signal de tension alternative et à la digitalisation des valeurs explorées; et de moyens digitaux de calculateur destinés à calculer l'amplitude du signal de tension alternative de sortie depuis les valeurs d'exploration digitalisées; **caractérisé par le fait que**

(a) les moyens d'exploration sont adaptés à explorer le signal de tension alternative plus que deux fois à des moments avec un écart de phase défini dans une demi-onde, et

(b) les moyens de calculateur comprennent un filtre digital de bande (32) auquel les signaux de tension alternative explorées et digitalisées sont appliqués.

4. Capteur de signal selon la revendication 4, **caractérisé par le fait que** le filtre digital de bande

(a) forme une première combinaison linéaire de premières valeurs explorées et digitalisées du signal de tension alternative,

$$(2)\quad \widetilde{y} = a_0 y_0 + a_{-1} y_{-1} + \ldots + a_{-(n-1)} y_{-(n-1)}$$

(b) et une seconde combinaison linéaire de secondes valeurs explorées et digitalisées de secondes valeurs du signal de tension alternative

$$(3)\quad \widetilde{z} = a_0 z_0 + a_{-1} z_{-1} + \ldots + a_{-(n-1)} z_{-(n-1)}$$
$$= a_0 y_{-1} + a_{-1} y_{-2} + \ldots + a_{-(n-1)} y_{-n}$$

les secondes valeurs étant explorées en rapport de phase fixe par rapport aux premières valeurs, et

(c) l'amplitude (A) du signal de tension alternative est formée de la relation

$$(4) \quad A = b\sqrt{\widetilde{y}^2 + \widetilde{z}^2 - \widetilde{y} \cdot \widetilde{z},}$$

(d) les coéfficients de filtre satisfont à la relation

$$(5) \quad b = \left[ \sum_{k=0}^{-(n-1)} \sum_{l=0}^{-(n-1)} a_k \, a_l \frac{1}{4} \left( 3\cos(k-l)\,\psi \right) - \sqrt{3}\,\sin((k-l)\,\psi) \right]^{-1/2}$$

5. Capteur de signal selon l'une ou plusieurs des revendications 3 à 4, **caractérisé par le fait que**

(a) le signal de tension alternative est dérivé de la tension alternative de référence et est soit en phase soit en phase opposé par rapport à celle-ci,

(b) on a prévu des moyens destinés à former un signal de signe dérivé de la tension alternative de référence, et

(c) les moyens de calculateur sont adaptés à former un signal représentant le signe de la tension alternative à partir d'une valeur explorée du signal de tension alternative et le signal de signe associé.

Fig.1

Fig. 3

Fig.2

Fig. 4

Fig. 5

Fig.6

EP 0 344 488 B1